# EUROPEAN PATENT SPECIFICATION

(11) **EP 2 671 823 B1**
(45) Date of publication and mention of the grant of the patent: **15.10.2014**
(21) Application number: 13167444.2
(22) Date of filing: 13.05.2013
(51) Int. Cl.: B65G 17/08, B65G 17/46, B65G 47/34

(54) **Chain conveyor with magnets**
Kettenförderer mit Permanentmagneten
Transporteur à chaîne avec aimants

(30) Priority: 04.06.2012 JP 2012127247
(43) Date of publication of application: 11.12.2013
(73) Proprietor: Tsubakimoto Chain Co., Kita-ku Osaka 530-0005 (JP)
(72) Inventor: Ota, Keiko, Osaka, 530-0005 (JP)
(74) Representative: Loock, Jan Pieter

(56) References cited:
- JP-A- 2012 030 936
- US-A- 2 344 975
- US-B1- 6 938 751

## Description

### FIELD OF THE INVENTION

This invention relates to a chain conveyor apparatus for loading and conveying articles to be conveyed (referred to simply as "articles" hereinafter), and more specifically to a chain conveyor apparatus for loading articles such as metallic mechanical parts and bakery trays by securely attracting and retaining the articles by magnetism even in a condition in which a loading surface is inclined or is slippery.

### BACKGROUND OF THE INVENTION

Conventionally, there is known a chain conveyor apparatus using a conveyor chain composed of a large number of conveying link modules each having a loading surface for loading articles and hinge knuckles projecting from front and rear ends of the loading surface, link pins connecting the link modules in a chain width and longitudinal directions, and a large number of magnetism generating link modules each disposed on a side of the link modules along the chain longitudinal direction through an extension of the link pin.

JP 2012-30936 (and corresponding document EP 2 433883) discloses such a chain conveyor, in accordance with the preamble of claim 1.

Such chain conveyor apparatus conveys articles while attracting and retaining the articles on the loading surface of a loading portion by magnetism of magnet pieces, even if the loading surface is inclined or is slippery due to food oil or machining oil.

However, the prior art chain conveyor apparatus has a problem that it is necessary to forcibly detach the articles from the attractive force of the magnet pieces to dam up the articles, i.e., to temporarily retain the articles, in a case when other articles are to be accumulated on the way of a conveying area of the conventional chain conveyor apparatus. At this time, a force in a direction opposite from a conveying direction is generated in an attempt to dam up the articles and acts on the traveling conveyor chain, so that a burden of power applied to the traveling conveyor chain increases due the force generated in damming up the articles.

The conventional chain conveyor apparatus has also another problem that because the force generated in damming up the articles forcibly acts between the loading surface of the traveling conveyor chain and a bottom surface of the articles to be accumulated, the conveyor chain travels while in slidable contact with the bottom surface of the articles by the whole surface thereof and is prone to wear the whole bottom surface of the articles.

Accordingly, there is a need for a chain conveyor apparatus that simply realizes an accumulation operating environment for readily temporarily damming up and retaining articles at an accumulation position such as an inclined conveying area, and for reducing a burden of power applied to the conveyor chain.

### SUMMARY OF THE INVENTION

This need is fulfilled by the chain with the features of the appended claims.

The chain conveyor apparatus of the invention includes the conveyor chain composed of the large number of synthetic resin link modules each having the loading portion for loading articles and the hinge knuckles projecting from the front and rear ends of the loading portion, the link pins inserted into the hinge knuckles of the link modules to connect the link modules in the chain longitudinal direction, the magnet pieces built in the conveyor chain to convey the articles while attracting and retaining the articles on the loading surface of the synthetic resin link modules by the magnetic force of the magnet pieces, so that it is not only possible to convey the articles such as metallic mechanical parts and bakery trays loaded on the conveyor chain without fall by securely attracting and retaining the articles on the loading surface of the conveyor chain by the magnetism of the magnet pieces even if the loading surface is inclined upward or downward or in a slippery low-friction condition due to food oil, machining oil and others, but also to bring about the following remarkable effects peculiar to the invention.

According to a first aspect of the invention, the chain conveyor apparatus further includes the attraction detaching pieces built in the plurality of synthetic resin link modules to detach and release the condition of the articles attracted and retained by the magnetism by pushing up the articles from the loading surface, and the projection driving mechanism provided in the straight area on the inner circumferential side of the conveyor chain along the chain longitudinal direction to project the attraction detaching pieces in and out of the loading surface of the synthetic resin link module.

With this arrangement, the projection driving mechanism projects the attraction detaching piece, and the attraction detaching pieces detach and release the condition of the articles attracted and retained by the magnetism by pushing up the articles from the loading surface in accumulating, i.e., in temporarily retaining, the articles on a way of an inclined conveying area for example.

Accordingly, it is possible to dam up and to simply and temporarily retain the article by using a blocking means such as a stopper at an accumulation position such as the inclined conveying area, and to reduce a burden of power applied to the conveyor chain by reducing power acting in a direction opposite from a conveying direction in an attempt of dam up the articles by detaching and releasing the attracted and retained condition of the articles loaded on the conveyor chain.

Still further, because the attraction detaching pieces and the projection driving mechanism are built in the synthetic resin link modules and the straight area on the inner circumferential side of the conveyor chain, respectively, it is not necessary to provide a space for installing the attraction detaching pieces and the projection driving mechanism separately on the loading surface of the conveyor chain or in a straight area on an outer circumferential side of the conveyor chain, allowing the accumulation operating environment to be realized easily and simply.

According to a second aspect of the invention, the synthetic resin link modules have slide groove portions for sliding both right and left ends of the attraction detaching piece from the side of the back surface to the side of the loading surface within the synthetic resin link modules.

With this arrangement, synergistically with a self-lubricant function of the synthetic resin link modules, the attraction detaching piece can be smoothly pushed out of the loading surface of the conveyor chain at a predetermined accumulation position across the chain width direction, and instantly detaches and releases the attracted and retained condition of the article on the loading surface of the conveyor chain.

According to a third aspect of the invention, the projection driving mechanism is composed of the plurality of fixed guide rails spaced from each other in parallel on the inner circumferential side of the conveyor chain along the chain longitudinal direction to slidably travel the conveyor chain, and the movable push-up rail disposed across the fixed guide rails so as to be able to push up the attraction detaching pieces disposed between these fixed guide rails from the loading surface of the synthetic resin link modules.

With this arrangement, even if the conveyor chain rises and falls in the straight conveying area by being affected by a polygonal movement caused by engagement with the driving sprocket, the fixed guide rails steadily receive and support the traveling conveyor chain. Accordingly, the movable push-up rail can project the attraction detaching pieces in and out of the loading surface of the synthetic resin link module between the fixed guide rails and can release the attracted and retained condition of the article loaded on the conveyor chain.

According to a fourth aspect of the invention, the magnet piece is built in the synthetic resin link module in non-contact with the article.
With this arrangement, the loading surface of the synthetic resin link modules is made flat, so that the articles can be conveyed while being stably loaded thereon.

Further features of the present invention will become apparent from the following description of exemplary embodiments with reference to the attached drawings.

### BRIEF DESCRIPTION OF DRAWINGS

FIG. 1 is a general view showing a mode of use of a chain conveyor apparatus of a first embodiment of the invention;
FIG. 2 is a perspective assembly and exploded view of a conveyor chain of the first embodiment of the invention;
FIG. 3 is a plan view of the chain conveyor apparatus of the first embodiment of the invention;
FIG. 4 is a section of the chain conveyor apparatus taken along a line 4-4 indicated in FIG. 3;
FIG. 5 is a section view of the chain conveyor apparatus taken along a line 5-5 indicated in FIG. 3;
FIG. 6 is a section view illustrating a condition in which a movable push-up rail shown in FIG. 5 is pushed up in a vertical direction;
FIG. 7 is a perspective view showing a synthetic resin link module having an attraction detaching piece shown in FIG. 2;
FIG. 8 is a perspective view of the synthetic resin link module viewed from an arrow 8 indicated in FIG. 7;
FIG. 9 is a perspective assembly and exploded view of a conveyor chain of a second embodiment of the invention;
FIG. 10 is a plan view of the chain conveyor apparatus according to the second embodiment of the invention;
FIG. 11 is a perspective view of a synthetic resin link module having an attraction detaching piece shown in FIG. 9; and
FIG. 12 is a perspective view of the synthetic resin link module shown in FIG. 11 viewed from an arrow 12.

### DESCRIPTION OF PREFERRED EMBODIMENTS

### (First Embodiment)

A chain conveyor apparatus 100 of a first embodiment of the invention will be described below with reference to the drawings.

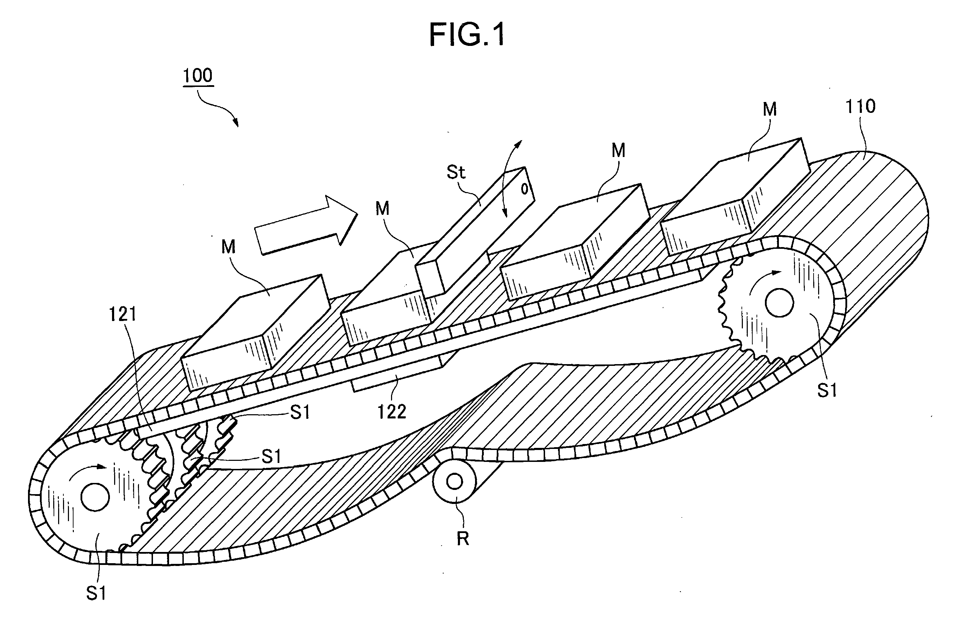

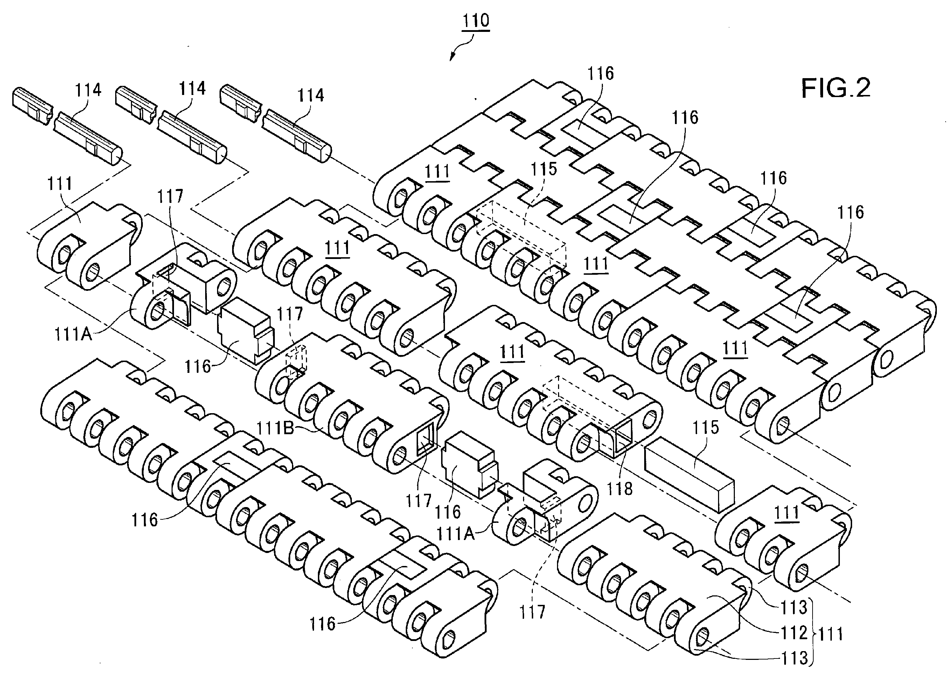

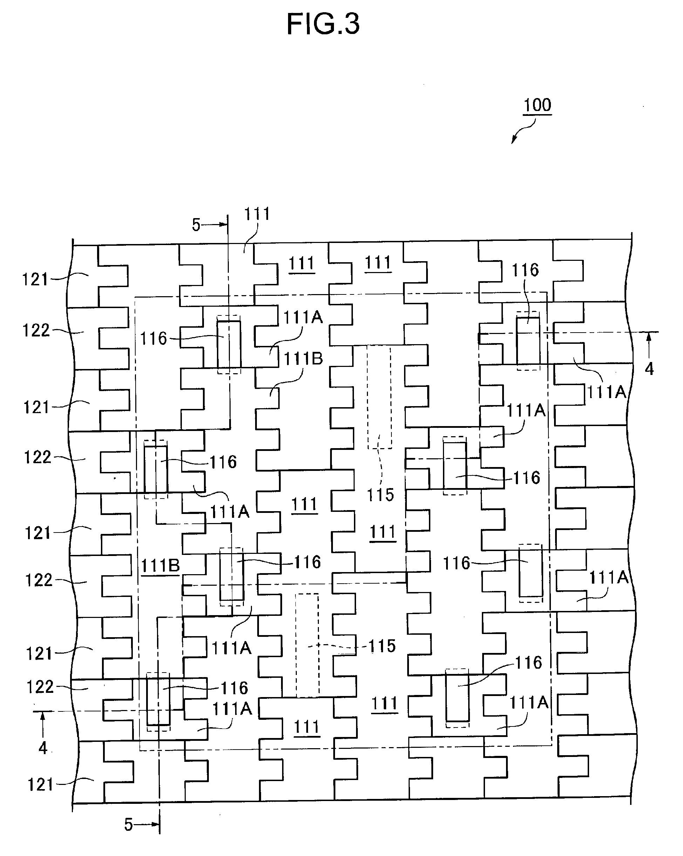

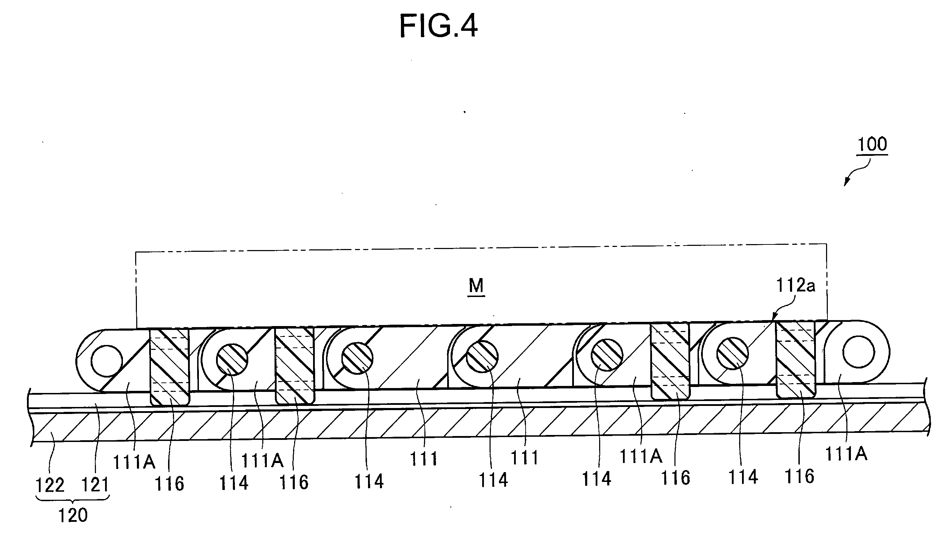

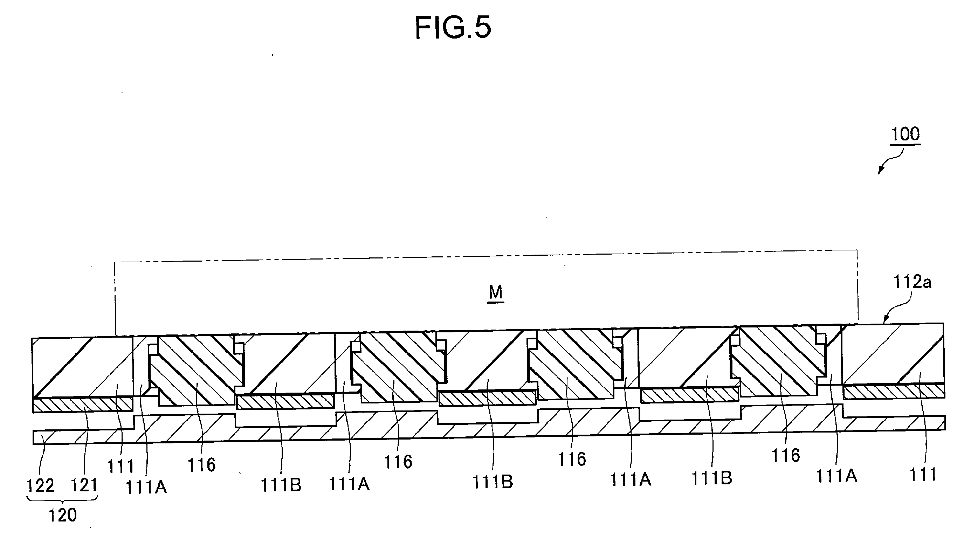

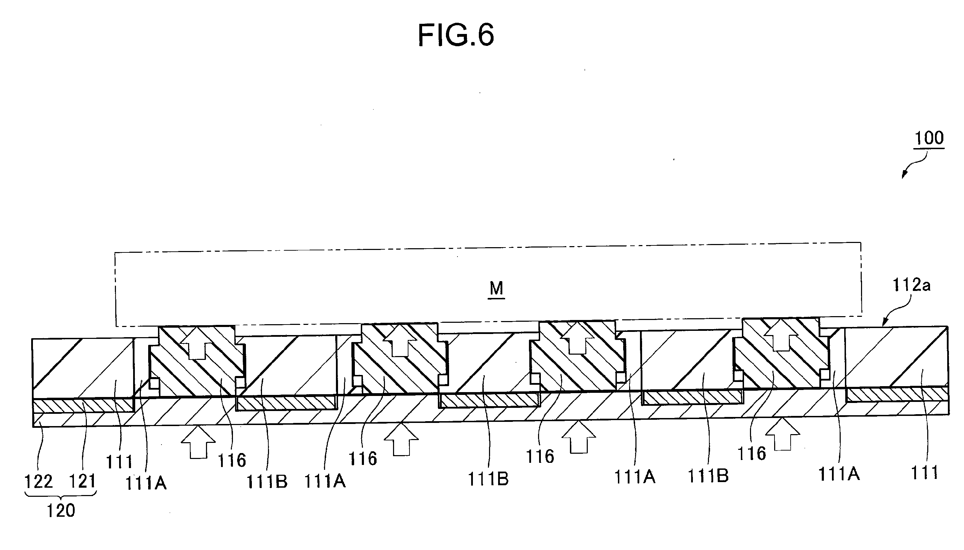

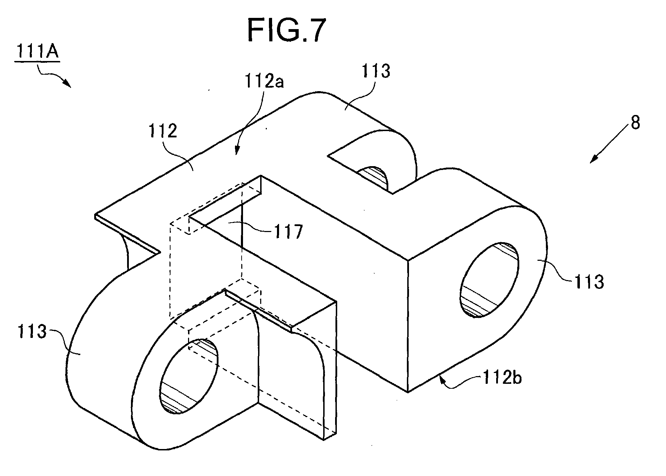

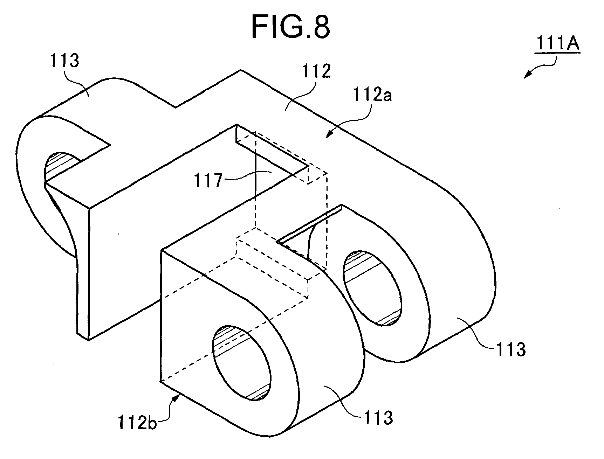

Here, FIG. 1 is a general view showing a mode of use of the chain conveyor apparatus 100 of a first embodiment of the invention, FIG. 2 is a perspective assembly and exploded view of a conveyor chain 110 of the first embodiment of the invention, FIG. 3 is a plan view of the chain conveyor apparatus 100 of the first embodiment, FIG. 4 is a section of the chain conveyor apparatus 100 taken along a line 4-4 indicated in FIG. 3, FIG. 5 is a section view of the chain conveyor apparatus 100 taken along a line 5-5 indicated in FIG. 3, FIG. 6 is a section view illustrating a condition in which a movable push-up rail 122 shown in FIG. 5 is pushed up in a vertical direction, FIG. 7 is a perspective view showing a synthetic resin link module 111 accommodating an attraction detaching piece 116 shown in FIG. 2, and FIG. 8 is a perspective view of the synthetic resin link module 111 viewed from an arrow 8 indicated in FIG. 7.

As shown in FIG. 1, the chain conveyor apparatus 100 of the first embodiment basically includes the conveyor chain 110 composed of a large number of synthetic resin link modules 111, each having a loading portion 112 for loading articles M and hinge knuckles projecting from front and rear ends of the loading portion 112, link pins 114 inserted into the hinge knuckles 113 to connect the link modules 111 at least in a chain longitudinal direction by, and driving and driven sprockets S1 and S2 around which the conveyor chain 110 is wrapped and driven. The chain conveyor apparatus 100 conveys the articles M upward on a slope as indicated by an arrow in FIG. 1.

It is noted that the chain conveyor apparatus 100 also includes a stopper St provided swingably to accumulate the articles M, and a return roller R provided at a return side of the conveyor chain.

Next, configurations of an attraction detaching piece 116 and a projection driving mechanism 120, which are the most characteristic parts of the chain conveyor apparatus 100 of the present embodiment, will be described in detail with reference to the drawings.

That is, as shown in FIGs. 2 through 5, two synthetic resin link modules 111A among a plurality of synthetic resin link modules 111 that compose each link row of the conveyor chain 110 have the attraction detaching pieces 116, respectively. The attraction detaching piece 116 is configured to detach and release a condition of the articles M attracted and retained by the magnetism by pushing up the articles M from a loading surface 112a.

The projection driving mechanism 120 that pushes these attraction detaching pieces 116 so as to project out of the loading surface 112a of the synthetic resin link modules 111 is provided in a straight area on an inner circumferential side of the conveyor chain 110 along the chain longitudinal direction.

Thus, the attraction detaching pieces 116 are built in the synthetic resin link modules 111A and the projection driving mechanism 120 is disposed in the straight area of the inner circumferential side of the conveyor chain 110, respectively, and by being projected out by the projection driving mechanism 120, the attraction detaching pieces 116 push up the articles M from the loading surface 112a of the conveyor chain 110 and detach and release the condition of the articles M attracted and retained by the magnetism on the conveyor chain 110 as shown in FIG. 6, when the articles M are to be accumulated, i.e., to be temporarily retained, on the way of the inclined conveying area.

It is noted that although the attraction detaching pieces 116 are disposed by two each in the link row in the chain width direction in the present embodiment, a specific pattern of the attraction detaching pieces 116 may be arranged in accordance to size of the article M. That is, the pattern may be arranged in any pattern such as those in which one or more attraction detaching pieces are disposed in the chain longitudinal direction or the chain width direction, or in which the attraction detaching pieces are disposed at a center part or on both sides of the conveyor chain 110.

The synthetic resin link module 111A whose loading portion 112 is partially cut away along the chain width direction as shown in FIGs. 7 and 8 and the synthetic resin link module 111B neighboring the synthetic resin link module 111A in the chain width direction respectively have slide groove portions 117 for sliding both right and left ends of the attraction detaching piece 116 from a side of a back surface 112b to a side of the loading surface 112a within the synthetic resin link module 111A as shown in FIG. 2.

With this arrangement, synergistically with a self-lubricant function of the synthetic resin link modules 111A and 111B, the attraction detaching piece 116 can be smoothly pushed out of the loading surface 112a of the conveyor chain 110 at a predetermined accumulation position across the chain width direction and instantly detaches and releases the condition of the article M attracted and retained by the magnetism on the loading surface 112a of the conveyor chain 110.

The projection driving mechanism 120 described above is composed of five fixed guide rails 121 spaced from each other in parallel on the inner circumferential side of the conveyor chain 110 along the chain longitudinal direction to slidably travel the conveyor chain, and one movable push-up rail configured to be able to push up the attraction detaching pieces 116 disposed between these fixed guide rails 121 from the loading surface 112a of the synthetic resin link modules 111.

With this arrangement, even if the conveyor chain 110 rises and falls in the straight conveying area by being affected by a polygonal movement caused by engagement with the driving sprocket S1, the fixed guide rails 121 steadily receive and support the traveling conveyor chain 110, and the movable push-up rail 122 projects the attraction detaching pieces 116 in and out of the loading surface 112a of the synthetic resin link module 111A between the fixed guide rails 121 to detach and release the attracted and retained condition of the article M loaded on the conveyor chain 110.

It is noted that although the fixed guide rails 121 extend between the driving and driven sprockets S1 and S2 as shown in FIG. 1 in the present embodiment, they may be provided intermittently between the driving and driven sprockets S1 and S2 as long as they can support the conveyor chain 110.

Then, as shown in FIG. 2, each magnet piece 115 is built in the synthetic resin link module 111 in non-contact with the article M, i.e., is accommodated within a magnet accommodating blind hole 118 whose end opens to a link side surface of the synthetic resin link module 111.

Thereby, the loading surface 112a of the synthetic resin link module 111 is made flat so as to convey the article M while stably loading it.

Thus, the chain conveyor apparatus 100 of the present embodiment configured as described above includes the synthetic resin link modules 111A each having the attraction detaching piece 116 that detaches and releases the attracted and retained condition of the article M by pushing up the article M from the loading surface 112a, and the projection driving mechanism 120 that projects the attraction detaching piece 116 out of the loading surface 112a and that is provided in the straight area of the inner circumferential side of the conveyor chain 110 along the chain longitudinal direction.

With this arrangement, it is possible to dam up and to simply and temporarily retain the article M by using the stopper St at the accumulation position such as the inclined conveying area and to reduce the burden of power applied to the conveyor chain 110 by reducing the power generated in the direction opposite from the conveying direction in the attempt to dam up the articles M by detaching and releasing the attracted and retained condition of the articles M loaded on the conveyor chain 110.

This arrangement also requires no space for installing the attraction detaching piece 116 and the projection driving mechanism 120 to be provided separately on the loading surface 112a of the conveyor chain 110 or in a straight area on an outer circumferential side of the conveyor chain 110, allowing the accumulation operating environment to be realized easily and simply.

Still further, this arrangement is provided with the pair of right and left slide groove portions 117 for sliding the both right and left ends of the attraction detaching piece 116 from the side of the back surface 112b to the loading surface 112a within the synthetic resin link modules 111, so that the article M can be released from the magnetic force of the magnet piece 115 built within the conveyor chain 110 and can be freely accumulated. Thus, the advantageous effects of this arrangement are remarkable.

### (Second Embodiment)

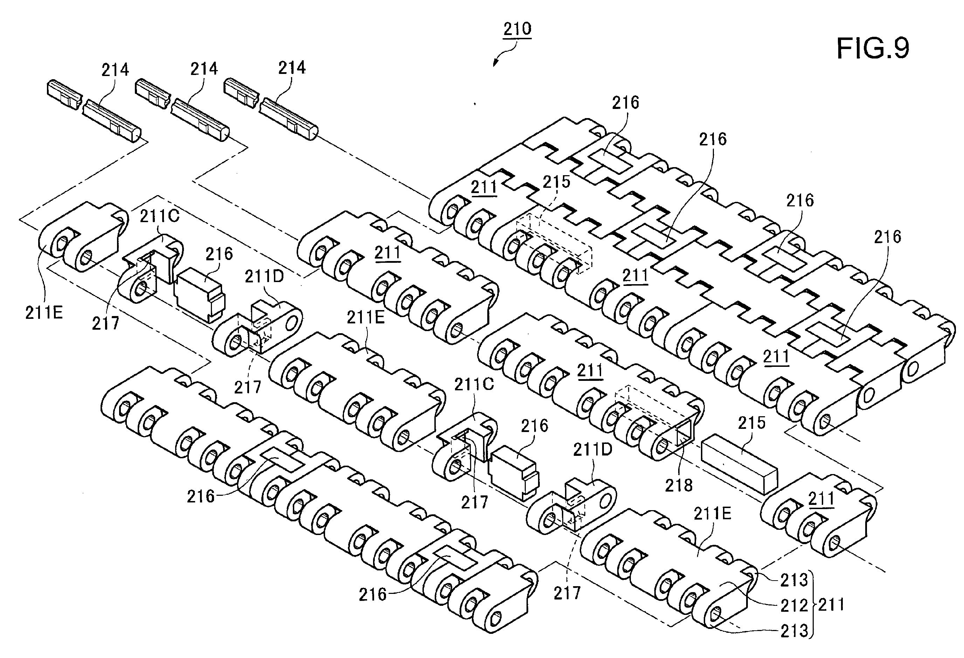

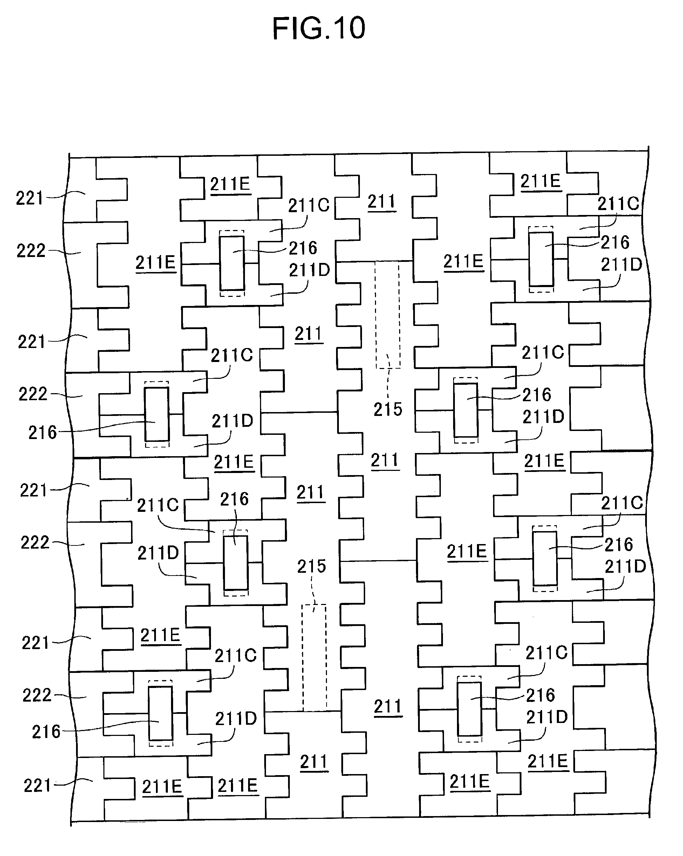

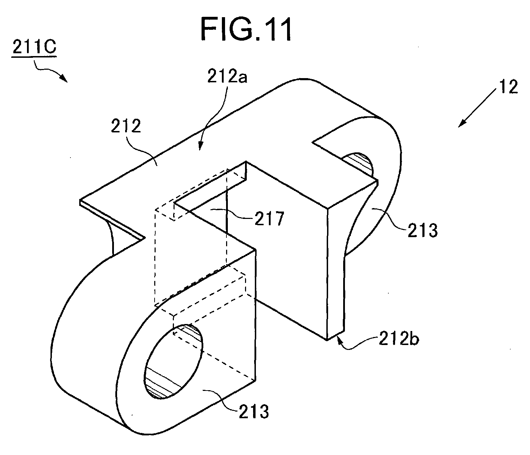

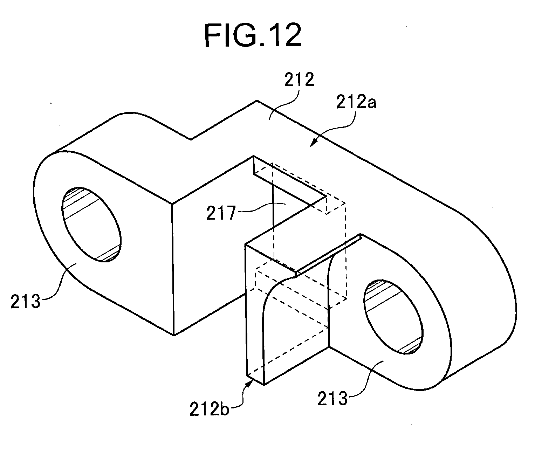

Next, a chain conveyor apparatus 200 of a second embodiment of the invention will be described with reference to the drawings. Here, FIG. 9 is a perspective assembly and exploded view of a conveyor chain 210 of the second embodiment of the invention, FIG. 10 is a plan view of a chain conveyor apparatus 200 of the second embodiment, FIG. 11 is a perspective view of a synthetic resin link module 211 accommodating an attraction detaching piece 216 shown in FIG. 9, and FIG. 12 is a perspective view of the synthetic resin link module 211 viewed from an arrow 12 in FIG. 11.

As compared to the configurations of the chain conveyor apparatus 100 of the first embodiment described above, configurations and parts of the chain conveyor apparatus 200 of the second embodiment are basically the same except the configuration of a synthetic resin link module 211 accommodating an attraction detaching piece 216, so that the same or corresponding members of the chain conveyor apparatus 200 with those of the chain conveyor apparatus 100 will be denoted by the corresponding reference numerals in 200s and an overlapped explanation thereof will be omitted here.

That is, as shown in FIGs. 9 through 12, a pair of right and left synthetic resin link modules 211C and 211D each having a shape symmetrical to each other for accommodating the attraction detaching piece 216 so as to straddle the attraction detaching piece 216 has a pair of right and left slide groove portions 217, respectively, for sliding both right and left ends of the attraction detaching piece 216 from the side of a back surface 212b to the side of a loading surface 212a within the synthetic resin link modules 211c and 211D.

With this arrangement, synergistically with a self-lubricant function of the synthetic resin link modules 211C and 211D, the attraction detaching piece 216 can be smoothly pushed out of the loading surface 212a of the conveyor chain 210 at a predetermined accumulation position across the chain width direction and instantly detaches and releases the attracted and retained condition of the article M loaded on the loading surface 212a of the conveyor chain 210. Still further, this arrangement requires no stop mechanism for stopping the attraction detaching piece 216 otherwise provided in the synthetic resin link module 211E neighboring widthwise to the synthetic resin link modules 211C and 211D, and allows the conventional synthetic resin link modules to be used as they are.

The chain conveyor apparatus 200 of the present embodiment thus attained can not only bring about the same effects with the chain conveyor apparatus 100 of the first embodiment and allows the articles M to be freely accumulated by releasing the articles M from the magnetic force of the magnet pieces 215 built in the conveyor chain 210, but also allows an increase of burdens of design and manufacturing to be reduced in building the attraction detaching pieces 216 in the conveyor chain 210. Thus, the advantageous effects of the present embodiment are remarkable.

The chain conveyor apparatus of the invention may take any configuration specifically as long as it includes the conveyor chain composed of the large number of synthetic resin link modules each having the loading portion for loading articles and the hinge knuckles projecting from the front and rear ends of the loading portion, the link pins inserted into the hinge knuckles of the link modules to connect the link modules in the chain longitudinal direction, the magnet pieces built in the conveyor chain to convey the articles while attracting and retaining the articles on the loading surface of the synthetic resin link modules by the magnetic force of the magnet pieces, the attraction detaching pieces built in the plurality of synthetic resin link modules to detach and release the condition of the articles attracted and retained by the magnetism by pushing up the articles from the loading surface, and the projection driving mechanism provided in the straight area on the inner circumferential side of the conveyor chain along the chain longitudinal direction to project the attraction detaching pieces in and out of the loading surface of the synthetic resin link modules.

Thus, the chain conveyor apparatus simply and readily realizes the accumulation operating environment that allows the articles to be readily dammed up and temporarily retained at the accumulation position such as the inclined conveying area, and allows the burden of power applied to the conveyor chain is reduced.

A specific material of the synthetic resin link module used for the conveyor chain of the invention may be any material as long as it is synthetic resin having favorable mechanical properties and molding accuracy, such as polyamide resin, polyester resin, polyacrylic resin, polyacetal resin, polyvinyl chloride resin, polystyrene resin and others.

Still further, a specific shape of each of the synthetic resin link modules may be any shape as long as it includes a loading portion for loading articles and hinge knuckles projecting from the front and rear ends of the loading portion, and it allows the large number of synthetic resin link modules to be connected in the chain longitudinal direction through the link pins inserted into the hinge knuckles.

Specifically, the synthetic resin link modules may be arranged in any manner as long as the large number of synthetic resin link modules are connected at least in the chain longitudinal direction by the link pins inserted into the hinge knuckles. For example, the large number of synthetic resin link modules may be disposed in a line and connected with each other in the chain longitudinal direction by the link pins inserted into the hinge knuckles, or the large number of synthetic resin link modules may be disposed in the chain longitudinal direction and chain width direction and connected with each other by the link pins inserted into the hinge knuckles.

The plurality of attraction detaching pieces built into the conveyor chain of the invention may be arranged specifically in any manner such as those disposed continuously or intermittently in the chain longitudinal direction or the chain width direction, or those disposed at the center or the both sides of the conveyor chain.

Still further, the specific configuration of the synthetic resin link modules for building the attraction detaching pieces therein may be either one of those in which the pair of right and left slide groove portions for sliding the both right and left ends of the attraction detaching piece from the back surface to the loading surface within each synthetic resin link module is constructed straddling the synthetic resin link modules neighboring in the chain width direction of the conveyor chain, or is constructed within a module unit of the synthetic resin link modules composing the conveyor chain.

The configuration for building the magnet pieces in the conveyor chain of the invention may be any configuration as long as the magnet pieces are built in so as to attract and retain the articles on the loading surface by their magnetism. That is, the magnet pieces may be accommodated within accommodating containers mounted on sides of the conveyor chain, may be buried in the loading surface of the synthetic resin link modules, or may be accommodated within accommodating holes concaved on the loading surface of the synthetic resin link modules.

A specific material of the magnet piece used in the conveyor chain of the invention may be any magnet, such as rare-earth magnet, ferrite magnet or the like, as long as it is a permanent magnet that can assure a magnetic force necessary for attracting and retaining the articles.

### BRIEF DESCRIPTION OF REFERENCE NUMERALS

- 100, 200: Chain conveyor apparatus
- 110, 210: Conveyor chain
- 111, 111A, 111B, 211, 211C, 211D, 211E: Synthetic resin link module
- 112, 212: Loading portion
- 112a: Loading surface
- 113, 213: Hinge knuckle
- 114, 214: Link pin
- 115, 215: Magnet piece
- 116, 216: Attraction detaching piece
- 117, 217: Slide groove portion
- 120, 220: Projection driving mechanism
- 121, 221: Stationary guide rail
- 122, 222: Movable push-up rail
- R: Return roller
- S1: Drive sprocket
- S2: Driven sprocket
- M: Articles to be conveyed

## Claims

1. A chain conveyor apparatus (100) comprising:
a conveyor chain (110) composed of a plurality of synthetic resin link modules (111) each having a loading portion (112) for loading articles (M) and hinge knuckles (113) projecting from front and rear ends of the loading portion (112);
link pins (114) inserted into the hinge knuckles (113) of the link modules (111) to connect the link modules (111) in a chain longitudinal direction; and
magnet pieces (115) built in the conveyor chain (110) to convey the articles (M) while attracting and retaining on a loading surface (112a) of the synthetic resin link modules (111) by a magnetic force of the magnet pieces (115); **characterized in that**
attraction detaching pieces (116) are built in the plurality of synthetic resin link modules (111) to detach and release the condition of the articles (M) attracted and retained by the magnetism by pushing up the articles (M) from the loading surface (112a); and
a projection driving mechanism (120) is provided in a straight area on an inner circumferential side of the conveyor chain (110) along the chain longitudinal direction to project the attraction detaching pieces (116) in and out of the loading surface (112a) of the synthetic resin link module (111).

2. The chain conveyor apparatus according to Claim 1, **characterized in that** the synthetic resin link modules (111) have slide groove portions (117) for sliding both right and left ends of the attraction detaching piece (116) from a side of a back surface (112b) to a side of the loading surface (112a) within the synthetic resin link module (111).

3. The chain conveyor apparatus according to Claim 1 or 2, **characterized in that** the projection driving mechanism (120) is composed of a plurality of fixed guide rails (121) spaced from each other in parallel on the inner circumferential side of the conveyor chain (110) along the chain longitudinal direction to slidably travel the conveyor chain, and a movable push-up rail (122) disposed across the fixed guide rails (121) so as to be able to push up the attraction detaching pieces (116) disposed between the fixed guide rails (121) from the loading surface (112a) of the synthetic resin link modules (111).

4. The chain conveyor apparatus according to any one of Claims 1 through 3, **characterized in that** the magnet piece (115) is built in the synthetic resin link module (111) in non-contact with the articles (M).

## Patentansprüche

1. Kettenförderervorrichtung (100), aufweisend:
eine Förderkette (110), die aus mehreren Kunstharzgliedmodulen (111) gebildet ist, welche jedes einen Ladeabschnitt (112) zum Laden von Gegenständen (M) und Gelenkverbindungen (113) aufweisen, die von vorderen und hinteren Enden des Ladeabschnitts (112) vorstehen;
Gliedzapfen (114), die zum Verbinden der Gliedmodule (111) in einer Kettenlängsrichtung in die Gelenkverbindungen (113) der Gliedmodule (111) eingeführt sind; und
Magnetstücke (115), die zum Befördern der Gegenstände (M), während sie auf einer Ladefläche (112a) der Kunstharzgliedmodule (111) durch eine Magnetkraft der Magnetstücke (115) angezogen und gehalten sind, in die Förderkette (110) eingebaut sind; **dadurch gekennzeichnet, dass**
Anziehungstrennstücke (116) zum Trennen und Lösen des Zustands der Gegenstände (M), die durch den Magnetismus angezogen und gehalten sind, durch Hochdrücken der Gegenstände (M) von der Ladefläche (112a) in die mehreren Kunstharzgliedmodule (111) eingebaut sind; und
ein Vorstellantriebsmechanismus (120) in einem geraden Bereich an einer Innenumfangsseite der Förderkette (110) entlang der Kettenlängsrichtung zum Vorstellen der Anziehungstrennstücke (116) in die und aus der Ladefläche (112a) der Kunstharzgliedmodule (111) vorgesehen ist.

2. Kettenförderervorrichtung nach Anspruch 1, **dadurch gekennzeichnet, dass** die Kunstharzgliedmodule (111) Schieberillenabschnitte (117) zum Schieben des rechten sowie linken Endes des Anziehungstrennstücks (116) von einer Seite einer Rückfläche (112b) zu einer Seite der Ladefläche (112a) innerhalb der Kunstharzgliedmodule (111) aufweisen.

3. Kettenförderervorrichtung nach Anspruch 1 oder 2, **dadurch gekennzeichnet, dass** der Vorstellantriebsmechanismus (120) aus mehreren starren Führungsschienen (121), die parallel zueinander auf der Innenumfangsseite der Förderkette (110) entlang der Kettenlängsrichtung beabstandet sind, zum gleitbaren Laufen der Förderkette und einer beweglichen Hochschubschiene (122), die quer über den starren Führungsschienen (121) angebracht ist, um imstande zu sein, die Anziehungstrennstücke (116), die zwischen den starren Führungsschienen (121) angeordnet sind, von der Ladefläche (112a) der Kunstharzgliedmodule (111) hochzuschieben, gebildet ist.

4. Kettenförderervorrichtung nach einem der Ansprüche 1 bis 3, **dadurch gekennzeichnet, dass** das Magnetstück (115) kontaktfrei zu den Gegenständen (M) in das Kunstharzgliedmodul (111) eingebaut ist.

## Revendications

1. Appareil transporteur à chaîne (100) comprenant :
une chaîne de transport (110) constituée d'une pluralité de modules de maillons en résine synthétique (111) ayant chacun une partie de chargement (112) pour charger des articles (M) et des articulations de charnière (113) faisant saillie depuis des extrémités avant et arrière de la partie de chargement (112) ;
des axes de maillons (114) insérés dans les articulations de charnière (113) des modules de maillons (111) pour connecter les modules de maillons (111) dans une direction longitudinale de la chaîne ; et
des éléments magnétiques (115) incorporés dans la chaîne de transport (110) pour transporter les articles (M) tout en les attirant et les retenant sur une surface de chargement (112a) des modules de maillons en résine synthétique (111) par une force magnétique des éléments magnétiques (115) ;
**caractérisé en ce que**
des éléments de coupure d'attraction (116) sont incorporés dans la pluralité de modules de maillons en résine synthétique (111) afin de détacher et libérer l'état des articles (M) attirés et retenus par le magnétisme en poussant vers le haut les articles (M) depuis la surface de chargement (112a) ; et
un mécanisme d'entraînement par projection (120) est prévu dans une zone droite sur un côté circonférentiel interne de la chaîne de transport (110) le long de la direction longitudinale de la chaîne pour projeter les éléments de coupure d'attraction (116) dans et hors de la surface de chargement (112a) du module de maillons en résine synthétique (111).

2. Appareil transporteur à chaîne selon la revendication 1, **caractérisé en ce que** les modules de maillons en résine synthétique (111) ont des parties de gorges de coulissement (117) pour faire glisser les extrémités gauche et droite de l'élément de coupure d'attraction (116) depuis un côté d'une surface arrière (112b) jusqu'à un côté de la surface de chargement (112a) à l'intérieur du module de maillons en résine synthétique (111).

3. Appareil transporteur à chaîne selon la revendication 1 ou 2, **caractérisé en ce que** le mécanisme d'entraînement par projection (120) est constitué d'une pluralité de rails de guidage fixes (121) espacés les uns des autres parallèlement sur le côté circonférentiel interne de la chaîne de transport (110) le long de la direction longitudinale de la chaîne pour déplacer par coulissement la chaîne de transport, et un rail de poussée vers le haut déplaçable (122) disposé en travers des rails de guidage fixes (121) de manière à être en mesure de pousser vers le haut les éléments de coupure d'attraction (116) disposés entre les rails de guidage fixes (121) depuis la surface de chargement (112a) des modules de maillons en résine synthétique (111).

4. Appareil transporteur à chaîne selon l'une quelconque des revendications 1 à 3, **caractérisé en ce que** l'élément magnétique (115) est incorporé dans le module de maillons en résine synthétique (111) sans contact avec les articles (M).
